# EUROPEAN PATENT SPECIFICATION

(11) **EP 0 580 789 B1**
(45) Date of publication and mention of the grant of the patent: **14.08.1996**
(21) Application number: 92912372.7
(22) Date of filing: 31.03.1992
(51) Int. Cl.: B67B 7/00

(54) **PUNCTURING DEVICE FOR AEROSOL CONTAINERS**
PUNKTIERVORRICHTUNG FÜR AEROSOLBEHÄLTER
DIPOSITIF DE PERFORATION POUR BOMBES AEROSOL

(30) Priority: 19.04.1991 US 687760
(43) Date of publication of application: 02.02.1994
(73) Proprietor: Campbell, Michael C., Virginia Beach, VA 23454 (US); Campbell, Katherine C., Virginia Beach, VA 23454 (US)
(72) Inventor: Campbell, Michael C., Virginia Beach, VA 23454 (US); Campbell, Katherine C., Virginia Beach, VA 23454 (US)
(74) Representative: Steimle, Josef, Dipl.-Ing.
(86) International application number: PCT/US92/02609
(87) International publication number: WO 92/18418

(56) References cited:
- DE-A- 1 607 991
- FR-A- 616 328
- US-A- 3 169 665
- US-A- 3 828 976
- US-A- 3 926 340
- US-A- 4 407 341
- US-A- 4 580 700
- US-A- 4 934 055
- US-A- 5 114 043
- RESEARCH DISCLOSURE vol. 177, no. 136 , August 1975 pages 35 - 36 'APP. AND METH. FOR PUNCTUR. PRESSURIZED CYL.CONTAINING TOXIC RESIDUES'

## Description

### BACKGROUND OF THE INVENTION

This invention relates to a device for puncturing a pressurized containter for relieving the pressure therein and for releasing for collection in a receptacle the gases and residual contents thereof, said device comprising a generally elongated housing member defining an elongated cavity with openings at first and second ends thereof for receiving a pressurized container therein at said first end, said housing member having an intermediate aperture into said elongated cavity intermediate said first and second ends; a puncturing means movably mounted on said housing member for extending through said intermediate aperture and piercing said pressurized container whereby gases and residual contents thereof are emptied into said collection receptacle through said opening in said second end; further including an attachment means for securing said second end of said housing member to a receptacle for collecting contents expelled from said second end.

This invention relates generally to the art of waste disposal, and more specifically to devices for relieving aerosol cans of pressure and emptying them of residual contents in preparation for disposing or recycling them.

Pressurized aerosol cans, and other pressurized containers, have widespread usage in homes and industy. It has long been recognized that disposing of such containers constitutes a safety hazard in that exposure to excessive external heat and/or pressure can cause them to explode if they have not been relieved of internal pressure.

In addition, it has long been recognized that disposing of such containers often constitutes an environmental hazard because of their dangerous contents.

Due to these hazards, the Environmental Protection Agency (EPA), an agency of the US government, regulates disposal of pressurized containers as well as their contents. These regulations mandate that certain businesses and industries must puncture all pressurized containers prior to their disposal. Further, these regulations require that certain contents of the pressurized containers be captured and disposed of in particular manners. Depending upon the nature of the contents, such disposal methods can involve permanent disposal through incineration, landfills or other means; treatment and permanent disposal; treatment and recycling; and treatment and reclamation for a new use. An example of reclamation would be recovering a solvent contained in waste paint for use as a fuel. But again, whichever disposal method is used, the EPA requires many industries to relieve the pressures in all pressurized containers prior to transporting them for disposal.

Further, while EPA regulations do not apply to individuals and many small businesses, many of these still desire to dispose of hazardous contents of such containers, and the containers themselves, in a manner which provides personal safety and protects the environment, and would do so if a reliable, inexpensive apparatus therefor exists.

There have been a number of prior-art devices suggested for piercing pressurized containers such as are described in US patents 3,303,968 to Compere; 3,333,735 to Odasso; 3,828,976 to Sidelinker; 3,926,340 to Tygenhof; 4,500,015 to Penney, and 4,934,055 to Chambers. Some of these devices do not adequately provide for disposal of gases and residual contents of the pressurized containers, such as the devices of Compere, Sidelinker, Odasso, Tygenhof and Penney.

The device of Chambers (4,934,055) does provide for disposal of contents of pressurized cans, however, this device appears to be somewhat limited in application having an unduly small, custom-built, reservoir and apparently requiring an undue amount of strength and dexterity to operate. Also, the device of this patent does not appear to be sufficiently durable to withstand repeated use.

Although US patent 4,349,054 to Chipman et al. does provide for disposal of contents, not all of the contents will be evacuated, and the device of this patent is unduly large, complicated, and expensive.

Additional patent documents disclosing devices for puncturing pressurized cans and/or disposing of their contents include US patents 5,067,529 to Gonzalez-Miller et al., 4,459,906 to Cound et al., and 4,407,341 to Feldt et al. as well as Soviet patent document 821399 and German Offenlegungsschrift 1,607,991. All of these patent documents disclose relatively complicated, expensive, and large machines.

Thus, it is an object of this invention to provide a device for puncturing a pressurized container to relieve the pressure therein and for releasing gases and residual contents thereof into a collection receptacle which is not unduly complicated, which can be easily transported to a site and installed thereat, which is relatively easy and convenient to use requiring no outside power, which can be used with off-the-shelf receptacles in common use, which is relatively inexpensive to manufacture, which operates in a manner complying with EPA regulations in a safe and efficient manner, and which can accommodate pressurized containers of various sizes.

It is yet another object of this invention to render aerosol cans recyclable as scrap metal in safe condition for handling, with no shredded metal shards or sharp protrusions.

### SUMMARY OF THE INVENTION

This objects are solved with a device according to claim 1 having the DE-A-1 607 991 as closest state of the art.

According to this invention, a device for puncturing a pressurized container for relieving the pressure therein and for releasing the gases and residual contents thereof into a collection receptacle comprises an elongated housing member defining an elongated cavity with first and second openings at first and second ends thereof for receiving an inverted pressurized container in the first opening, the housing member having an intermediate aperture into the elongated cavity intermediate the first and second ends, the housing member including an attachment member for securing the second end of the housing member to a receptacle for collecting contents expelled from the second end when a puncturing member, which is movably mounted on the housing member, extends through the intermediate aperture and pierces a pressurized container in the cavity. The housing member defines an internal shoulder between the first end and the attachment means is constructed for selectively securing said second end to said receptacle. A seal can be included on the shoulder for forming a seal between the housing member and the pressurized container.

An auxiliary support member can extend from the housing member to the receptacle for preventing relative movement between the housing member and the receptacle during operation of the device.

### BRIEF DESCRIPTION OF THE DRAWINGS

The invention is described and explained in more detail below using the embodiments shown in the drawings. The described and drawn features, in other embodiments of the invention, can be used individually or in preferred combinations. The foregoing and other objects, features and advantages of the invention will be apparent from the following more particular description of a preferred embodiment of the invention, as illustrated in the accompanying drawings in which reference characters refer to the same parts throughout the different views. The drawings are not necessarily to scale, emphasis instead being placed upon illustrating principles of the invention in a clear manner.
Fig. 1 is a side, partially cross-sectional, view of a first-embodiment device of this invention;
Fig. 2 is a sectional view taken on line II-II in Fig. 1;
Fig. 3 is a sectional view taken on line III-III in Fig. 1;
Fig. 4 is a side, partially cross-sectional view of the device of Fig. 1 mounted on an off-the-shelf-barrel or drum with a filtered outlet;
Fig. 5 is an isometric view of an auxiliary support member which is part of the device of Fig. 1; and
Fig. 6. is an isometric view of an alternate embodiment of this invention.

### DESCRIPTION OF A PREFERRED EMBODIMENT

A device 10 for puncturing a pressurized container 12 for relieving the pressure therein and for releasing into a collection container or receptacle 14 the gases and residual contents thereof generally comprises an elongated housing member 16, puncturing apparatus 18, force-applying apparatus 20, and an auxiliary support member 22.

The generally elongated housing member 16 defines an elongated cavity 24 with first and second openings 26 and 28 at first and second ends 30 and 32 thereof. The elongated housing member 16 has an intermediate aperture 34 extending from outside the elongated housing member 16 into the elongated cavity 24 positioned intermediate the first and second open ends 30 and 32. The elongated housing member further includes a threaded terminus 36, with male threads thereon near the second end 32 which is dimensioned, and which has a thread pitch, for selectively engaging and disengaging a female threaded bung of a standard off-the-shelf 5 gal., 20 gal., 30 gal., 55 gal. drum 38 and others (although other embodiments can be sized and threaded to fit other collection containers or receptacles). In this regard, the standard off-the-shelf drums mentioned above all have 2 inch filling or spout bung holes with standard threads as well as 3/4 inch venting bung holes, also with standard threads. Similarly, drums meeting standards of other countries also usually have large and small threaded bung holes.

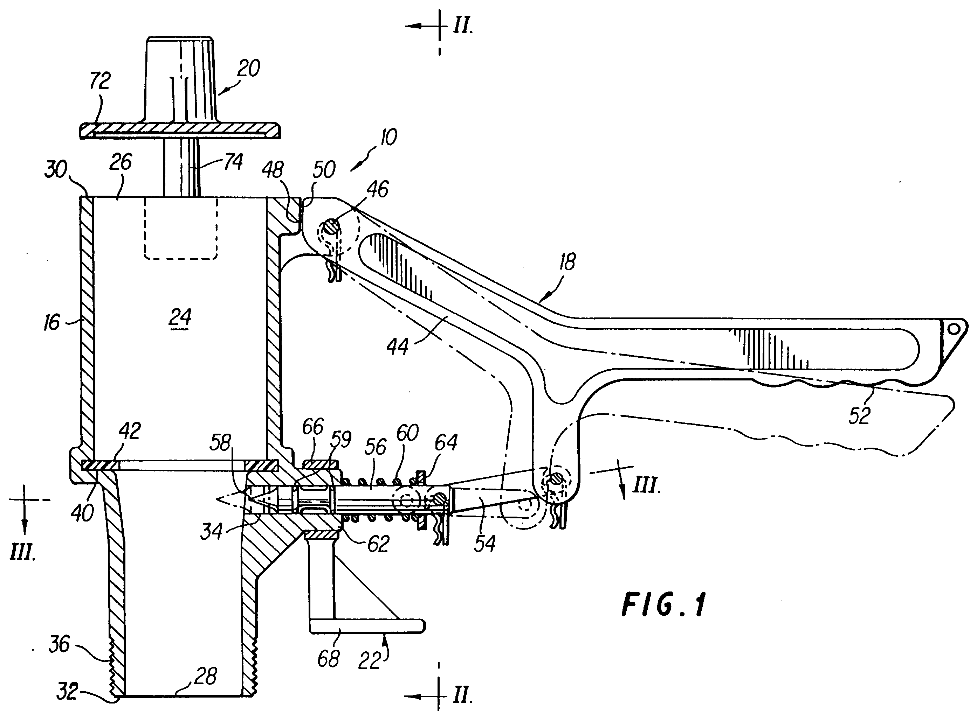

As can be seen in Fig. 1, the elongated housing member 16 defines an internal shoulder 40 therein immediately above the intermediate aperture 34, between the intermediate aperture 34 and the first end 30, such that the elongated cavity 24 has a relatively uniform cross-sectional area (about 2 7/8 inch in diameter in one embodiment) from the first end 30 to the shoulder 40 but thereafter has a reduced cross-sectional area (about 1 3/4 inch diameter in one embodiment). A resilient seal 42 is positioned on the shoulder 40 for sealing against pressurized cans inverted and inserted into the elongated cavity from the first end 30.

The puncturing apparatus 18 comprises a pivotal, angular lever 44 which is pivotally mounted to the elongated housing member 16 near the first end 30 thereof by a pivot pin 46. In this regard, the lever 44 has a lever stop surface 48 thereon which impinges on a housing member stop surface 50 to prevent the lever 44 from pivoting about the pivot pin 46 outwardly, away from the housing member 16, further than a particular angle. The lever 44 has a grip 52 at an outer end thereof with which an operator can rotate the lever 44 about the pivot pin 46. A pivoted link 54, comprised of two parallel slats, is pivotally coupled to the lever 44 at one end and to a puncture pin 56 at the other end. A free end of the puncture pin 56 has a pointed tip 58 and slides in the intermediate aperture 34. A pair of O-rings 59 on the puncture pin provides a seal between the intermediate aperture 34 and the puncture pin 56. An area of the pin between the O-rings is cut out and greased to provide self lubricating with each stroke of the puncture pin. A coiled spring 60 surrounding the puncture pin 56, externally of the housing member 16, presses between a tubular protrusion 62 of the elongated housing member 16 and a stop 64 of the puncture pin 56, thereby urging the puncture pin 56 outwardly, so as to be withdrawn from the elongated cavity 24. The particular angle at which stop surfaces 48 and 50 prevent the lever 44 from further outward pivoting is such that the O-ring seal area of the puncture pin 56 remains in the intermediate aperture when the lever is stopped at this angle. By rotating the lever 44 downwardly the coiled spring 60 can be overcome and the puncture pin 56 can be driven into the elongated cavity 24. As can be seen in Fig. 1, the tubular protrusion 62 surrounds the intermediate aperture 34.

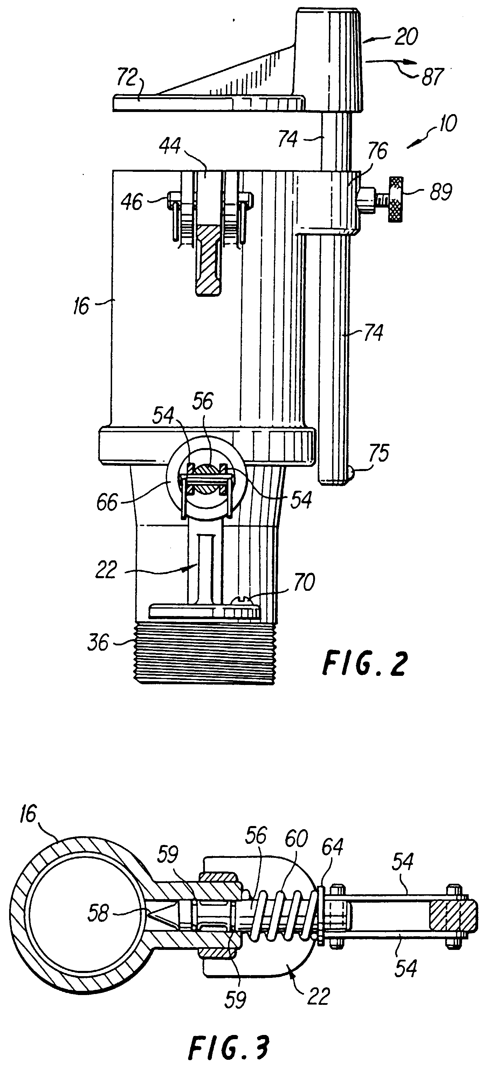

The auxiliary support member 22 has a sleeve 66, which snugly surrounds the protrusion 62 to be easily rotatable thereabout, and a foot 68. The auxiliary support member includes a grounding screw 70 (Fig. 2) to which an electrical wire can be attached. It should be noted that the foot 68 is spaced immediately adjacent, or just a little above, the threads of the threaded terminus 36 of the elongated housing member 16 when the auxiliary support member is rotated so that the foot 68 thereof is directed toward the second end 32.

The force-applying apparatus 20 comprises a plate 72 which is affixed to a shaft 74 which, in turn, is slidably mounted in a sleeve 76 formed on the outside of the elongated housing member 16. Thus, the plate 72 can be rotated into and out of alignment with the first opening 26 of the elongated housing member 16 as well as moved toward and away from the first opening 26. The shaft 74 has a stop 75 thereon to prevent its removal from the sleeve 76. The plate 72 has an indentation 72a thereon with a flat floor surface 72b for receiving the bottoms of inverted pressurized containers.

The device 10 can be constructed of various materials, however, in a preferred embodiment, the housing member 16, the lever 44, the plate 72 and the auxiliary support member 22 are formed of aluminum so that they are light in weight, with the seal 42 and O-ring 59 being of elastomeric materials. In a preferred embodiment, the puncture pin 56, the pivoted link 54, the pivot pins and clips are of stainless steel. Also, in a preferred embodiment the pointed tip 58 of the puncture pin 56 is of carbide steel or of some other non-sparking alloy, to prevent sparking and thereby promote safety.

In operation, the device 10 is mounted on a common off-the-shelf drum 38 (typically a 55 gal. or 30 gal. drum) by screwing the threaded terminus 36 of the elongated housing member 16 into the normal female threaded, 2 inch, filling bung opening 77 of the drum.

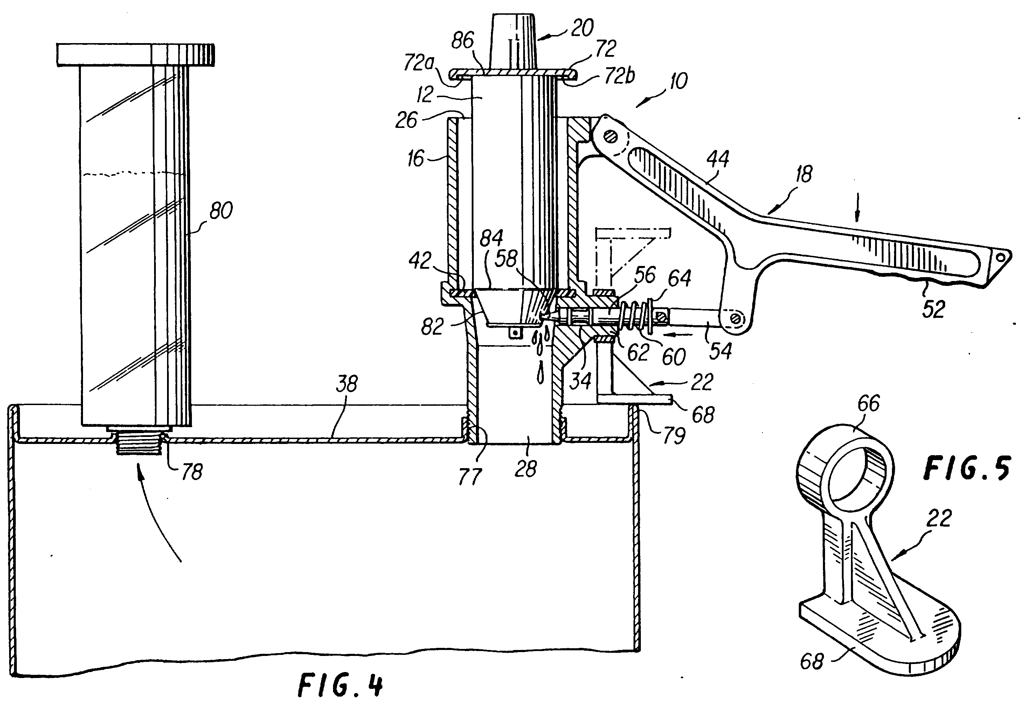

While screwing the threaded terminus 36 into the drum, the auxiliary support member, 22 is rotated upwardly about the tubular protrusion 62 to be out of the way so as to cause the least amount of wear on the bung threads of the drum as is depicted in dashed lines in Fig. 4. The auxiliary support member 22 is only rotated downwardly on the final rotation of installation such that the foot 68 impinges on a rim 79 of the drum. Thus, the auxiliary support member 22 is wedged between the rim 79 of the drum and the tubular protrusion 62 of the housing member 16.

A filter 80, which can be part of a kit including the puncturing device, is mounted in the normal 3/4 inch vent opening 78 of the drum 38 for filtering escaping propellent gases and collecting gaseous vapors thereof.

The plate 72 of the force-applying apparatus 20 is lifted and rotated away from the first opening 26 and a pressurized container 12 is inverted and a dome, or neck, 82 thereof is inserted into the first opening 26. A shoulder 84 of the neck 82 comes into contact with the seal 42 on the shoulder 40 of the elongated housing member 16 and forms a seal therewith. The plate 72 is rotated above the first opening 26 and slid to impinge on an upwardly-facing bottom 86 of the pressurized container 12 to thereby force the shoulder 84 of the container 12 against the seal 42 of the elongated housing member 16 and thereby form a seal between these two members. The plate 72, which can be made of a heavier weight material, maintains this position, because upward force applied thereto tends to rotate the shaft 74 in a direction indicated by arrow 87 (Fig. 2) which binds it in the sleeve 76. In addition, in one embodiment the sleeve 76 has a threaded set-screw hole therein for receiving a knobbed set-screw 89 to impinge on the shaft 74. When the set-screw 89 is tightened it holds the plate 72 even more firmly in a fixed position. Finally, many operators prefer to simply hold the plate 72 against a can by hand, because this is the quickest method of operation. The plate 72 flattens on a bottom surface of the pressurized container 12, thereby straightening the container 12 so that a good seal is formed between the seal 42 and the container's neck 82.

Thereafter, the grip 52 of the lever 44 is manipulated to rotate the lever 44 downwardly toward the elongated housing member 16 thereby driving the puncture pin 56 through the intermediate aperture 34 into the dome, or neck, 82 of the pressurized container 12. Pressure in the thusly punctured pressurized container 12 forces gases and residue material from the container through the second opening 28 into the drum 38 to which the elongated housing member 16 is screwed. Propellants and other gases escape through the filter 80 and are thereby filtered, with gaseous vapors being collected.

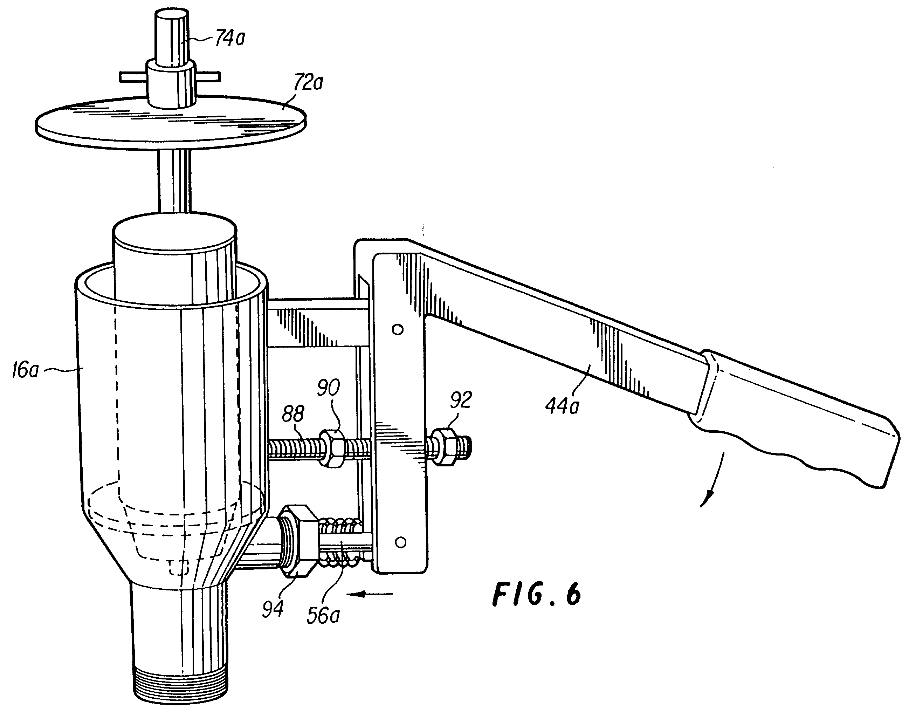

Fig. 6 discloses an alternate embodiment of this invention in which a lever 44a is shaped and mounted quite differently than described above to an elongated housing member 16a. In this regard, a separate stop threaded bolt 88 is attached to the elongated housing member 16a with nuts 90 and 92 thereon to form stops. In this embodiment, the pivoted link 54 is not needed. Further, in this embodiment, there is no auxiliary support member 22. A plate 72a is not affixed to a shaft 74a, but rather is slidably connected thereon and the shaft 74a is affixed to the elongated housing member 16a. In this embodiment, a puncture pin 56a does not have an O-ring mounted thereon, but rather packing material is held about the puncture pin in a tubular protrusion 62a by a screwed-in plug 94. Otherwise, the embodiment of Fig. 6 operates substantially the same as does the embodiment of Figs. 1-5.

It can be appreciated by those of ordinary skill in the art that the device for puncturing a pressurized container of this invention does not require a power source and can be located indoors or outdoors with no consideration for access to electricity or other power sources.

Also, the device of this invention can be directly attached to existing off-the-shelf collection containers or receptacles for collection of residual contents. That is, since the threaded terminus of the elongated housing member is sized to engage bung threads of typical storage drums, the invention can be easily transported without consideration for transporting large containers and can be inexpensively manufactured. It should be understood that although the device has been described herein to be mounted on drums standard in the United States, it could be sized to drum standards in any country.

Yet another benefit of this invention is that it accommodates most sizes of aerosol cans. Regardless of can diameters or lengths, the internal support shoulder of the elongated housing member is positioned and sized such that each inverted dome of an aerosol can is punctured at exactly the same spot as those of other cans. Conversely, this invention cannot be used to puncture a can with its nozzle-end, or dome-end, up. This is a safety feature, because the flat bottom of a container does not maximize evacuation of liquid residuals as does the funnel-shaped dome-end.

It is beneficial, however, that, although an aerosol can is punctured at its downwardly-facing nozzle-end, it is punctured from the side rather than from the end. This also enhances safety, because any force from released, compressed gas moves the can against an opposite side of the housing member rather than upwardly. This is important for protecting an operator who might forget to properly place the plate 72.

This invention is portable, lightweight and inexpensive, all features which facilitate compliance with regulations within a manufacturing plant. That is, the invention can be located at each "work center" at the convenience of workers, rather than in one centralized location which is where a large expensive machine would typically be located. That is, if a facility employs expensive machines, it is not economical to have many such machines spread out through the facility. However, manufacturing facilities have, in addition to their normal production line, maintenance shops where many aerosol cans are used, such as pump shops, machine shops, electrical shops, HVAC shops, maintenance shops etc.

Not only does this invention allow pressurized cans to be brought to "atmospheric pressure" prior to disposal, it also increases opportunities for recycling the cans. That is, aerosol cans which often contain chemicals will not be accepted by recyclers unless relieved of pressure. The 3 billion aerosol cans annually used in the US today amount to 375,000 tons of steel.

The lever operation of the device of this invention allows workers to easily puncture cans without endangering themselves, since compressed fluids are maintained in sealed portions of the elongated housing member, and workers are not in direct contact with the cans when they are punctured.

This invention facilitates the filtering of gases released from aerosol cans since filters can be relatively easily mounted to vent bung ports of standard drums.

Further, the device of this invention can be easily disassembled for required maintenance such as replacing pins or seals.

The auxiliary support member of this invention improves its operation by dissipating downwardly applied forces to a rim of the receptacle, which is usually the strongest part of the receptacle. Thus, the auxiliary support member protects an area around a bung opening of a drum. Further, because the rim height relative to the bung varies slightly from one receptacle to another, the auxiliary support member can be rotated downwardly against the rim at different revolutions of the elongated housing member during installation, a rounded rim of the foot providing contact for an additional half turn of the elongated housing member for adjustment.

Further, the auxiliary support member facilitates the electrical grounding of a drum, which is required by some governmental agencies, to prevent build-up of static electricity. By providing a grounding screw on the auxiliary support member, such grounding can be easily accomplished.

Since the auxiliary support member is rotatable about the tubular protrusion surrounding the intermediate aperture, it does not get in the way during mounting of the elongated housing member on the drum and it can be easily installed during the last rotation of the elongated housing member. The auxiliary support member ensures that relatively little stress is applied against the collection receptacle's threaded opening while allowing adjustment to different rim heights.

By placing O-rings in grooves of the puncture pin, fluid-tightness can be achieved with little effort. The recessed area between O-rings can be lubricated with grease so that the puncture pin is self-lubricated during use.

While the invention has been particularly shown and described with reference to preferred embodiments, it will be understood by those skilled in the art that various changes in form and detail may be made therein without departing from the scope of the invention as defined by the appended claims.

## Claims

1. A device (10) for puncturing a pressurized container (12) for relieving the pressure therein and for releasing for collection in a receptacle the gases and residual contents thereof, said device (10) comprising:
- a generally elongated housing member (16) defining an elongated cavity (24) with openings (26, 28) at first and second ends (30, 32) thereof for receiving a pressurized container (12) therein at said first end (30), said housing member (16) having an intermediate aperture (34) into said elongated cavity (24) intermediate said first and second ends (30, 32);
- a puncturing means (56) movably mounted on said housing member (16) for extending through said intermediate aperture (34) and piercing said pressurized container (12) whereby gases and residual contents thereof are emptied into said collection receptacle through said opening (28) in said second end (32);
- further including an attachment means (36) for securing said second end (32) of said housing member (16) to a receptacle for collecting contents expelled from said second end (32);
characterized in that
- said attachment means (36) is constructed for selectively securing said second end (32) to said receptacle; and
- said housing member (16) defines an internal shoulder (40) within said elongated cavity (24) between said intermediate aperture (34) and said first end (30).

2. A device according to claim 1 wherein said attachment means is a threaded terminus (36) on said second end (32) of said elongated housing member (16) for mating with threads of said collection receptacle.

3. A device according to claim 1 or 2 wherein said second end (32) is a male threaded terminus (36).

4. A device according to any of the preceding claims wherein a resilient seal (42) is included on said internal shoulder (40).

5. A device according to any one of the preceding claims wherein a force-applying means (20) is movably mounted on said housing member (16) for engaging said pressurized container (12) positioned in said elongated cavity (24) and forcing said pressurized container (12) towards said second end (32).

6. A device according to claim 5 wherein said force-applying means (20) comprises a plate (72) mounted on a shaft (74) which is slidable mounted on said housing member (16).

7. A device according to claim 6 wherein said shaft (74) is caused to bind relative to said housing member (16) in response to a force by said pressurized container (12) against said plate (72), thereby resisting movement of said plate (72).

8. A device according to any one of the preceding claims wherein said puncturing means comprises a puncturing pin (56) extending into said intermediate aperture (34), said puncturing pin (56) including a spring (60) for urging said pin (56) out of said elongated cavity (24) and a lever (44), pivotally mounted on the outside of said housing member (16), which is coupled to said pin (56) via a pivoted link (54), for driving said pin (56) into said elongated cavity (24).

9. A device according to claim 8 wherein said lever (44) and said housing member (16) have engaging stop surfaces (48, 50) thereon at a pivotal mount (46) of said lever (44) to said housing member (16) for preventing said lever (44) from pivoting away from said housing (16) beyond a predetermined angle.

10. A device according to claim 8 or 9 wherein said puncturing means includes a seal (59) on said puncturing pin (56) for forming a seal with that portion of said housing member (16) defining said intermediate aperture (34).

11. A device according to any one of the preceding claims wherein said at least a portion of said puncturing pin (56) is of a non-sparking metal.

12. A device according to any one of the preceding claims wherein is further included an auxiliary support member extending from said housing member (16) to said collection receptacle for stabilizing relative movement between said housing member (16) and said collection receptacle during operation of said device (10).

13. A device according to claim 12 wherein said auxiliary support member is rotatable on said elongated housing member (16).

14. A device according to claim 12 or 13 wherein said auxiliary support member is rotatable about a tubular protrusion (62) of said housing member (16) which defines said intermediate aperture (34).

15. A device according to any one of the preceding claims wherein said device (10) further includes a filter (80) for attachment to said receptacle to atmosphere while filtering said gases of vapours.

16. A device according to any one of the preceding claims wherein the male threads at said second end (32) of said elongated housing member (16) are for engaging standard threaded openings of off-the-shelf storage drums (38).

17. A collection receptacle in the form of a storage drum (38) comprising a device according to claims 12, 13 or 14 wherein said auxiliary support member is for extending from said housing member (16) to a rim (79) of said storage drum (38), the rim (79) preferably protruding from a main housing of said storage drum (38).

18. A collection receptacle comprising a device (10) according to claim 12, 13 or 14.

## Patentansprüche

1. Vorrichtung (10) zum Punktieren eines unter Druck stehenden Behälters (12) zum Befreien des darin enthaltenen Drucks und zum Ablassen der Gase und Restinhalte in einen Sammelbehälter, wobei die Vorrichtung (10) aufweist:
- ein im wesentlichen längliches Gehäuseelement (16) mit einem länglichen Hohlraum (24) mit an ersten und zweiten Enden (30, 32) vorgesehenen Öffnungen (26, 28) zur Aufnahme eines unter Druck stehenden Behälters (12) über das erste Ende (30), wobei das Gehäuseelement (16) eine im mittleren Bereich liegende, in den länglichen Hohlraum (24) zwischen dem ersten und zweiten Ende (30, 32) mündende Öffnung (34) aufweist;
- ein Punktiermittel (56), welches beweglich am Gehäuseelement (16) befestigt ist, um die mittlere Öffnung (34) zu durchdringen und den unter Druck stehenden Behälter (12) anzustechen, so daß dessen Gase und Restinhalte durch die Öffnung (28) im zweiten Ende (32) in den Sammelbehälter entleert werden;
- Befestigungsmittel (36) zum Befestigen des zweiten Endes (32) des Gehäuseelements (16) an einem Sammelbehälter zum Sammeln der aus dem zweiten Ende (32) sich ergießenden Behälterinhalte;
dadurch gekennzeichnet, daß
- das Befestigungsmittel (36) derart ausgebildet ist, daß selektiv das zweite Ende (32) am Sammelbehälter befestigbar ist; und
- daß das Gehäuseelement (16) eine innerhalb des länglichen Hohlraums (24) zwischen der mittleren Öffnung (34) und dem ersten Ende (30) liegende Schulter (40) aufweist.

2. Vorrichtung nach Anspruch 1, dadurch gekennzeichnet, daß das Befestigungsmittel ein mit einem Gewinde versehener Endabschnitt (36) des zweiten Endes (32) des länglichen Gehäuseabschnitts (16) ist, welches mit einem Gewinde des Sammelbehälters verbindbar ist.

3. Vorrichtung nach Anspruch 1 oder 2, dadurch gekennzeichnet, daß das zweite Ende (32) ein Endabschnitt (36) mit einem Außengewinde ist.

4. Vorrichtung nach einem der vorgehenden Ansprüche, dadurch gekennzeichnet, daß an der innenliegenden Schulter (40) eine nachgiebige Dichtung (42) vorgesehen ist.

5. Vorrichtung nach einem der vorhergehenden Ansprüche, dadurch gekennzeichnet, daß ein Mittel (20) zum Aufbringen einer Kraft beweglich am Gehäuseelement (16) befestigt ist, welches am unter Druck stehenden, im länglichen Hohlraum (24) vorgesehenen Behälter (12) angreift und den unter Druck stehenden Behälter (12) in Richtung des zweiten Endes (32) drängt.

6. Vorrichtung nach Anspruch 5, dadurch gekennzeichnet, daß das Mittel (20) zum Aufbringen einer Kraft eine Platte (72) aufweist, die an einer Welle (74) befestigt ist, welche verschiebbar am Gehäuseelement (16) befestigt ist.

7. Vorrichtung nach Anspruch 6, dadurch gekennzeichnet, daß die Welle (74) entgegen einer Kraft des unter Druck stehenden Behälters (12) relativ am Gehäuseelement (16) befestigbar ist, um eine Bewegung der Platte (72) zu verhindern.

8. Vorrichtung nach einem der vorhergehenden Ansprüche, dadurch gekennzeichnet, daß das Punktiermittel eine Punktiernadel (56) aufweist, die sich in die mittlere Öffnung (34) erstreckt, wobei die Punktiernadel (56) eine Feder (60), über die die Nadel (56) aus dem länglichen Hohlraum (24) herausgedrängt wird, und einen Hebel (44) aufweist, der schwenkbar an der Außenseite des Gehäuseelements (16) befestigt und mit der Nadel (56) über einen verschwenkbaren Lenker (54) verbunden ist, um die Nadel (56) in den länglichen Hohlraum (24) einzuschieben.

9. Vorrichtung nach Anspruch 8, dadurch gekennzeichnet, daß der Hebel (44) und das Gehäuseelement (16) zusammenwirkende Anschlagflächen (48, 50) aufweisen, die an einem verschwenkbaren Träger (46) des Hebels (44) und am Gehäuseelement (16) vorgesehen sind, um zu verhindern, daß der Hebel (44) über einen vorbestimmten Winkel hinaus vom Gehäuse wegverschwenkt wird.

10. Vorrichtung nach Anspruch 8 oder 9, dadurch gekennzeichnet, daß das Punktiermittel eine an der Punktiernadel (56) vorgesehene Dichtung (59) aufweist, die den Abschnitt des Gehäuseelements (16) mit der mittleren Öffnung (34) abdichtet.

11. Vorrichtung nach einem der vorhergehenden Ansprüche, dadurch gekennzeichnet, daß wenigstens ein Abschnitt der Punktiernadel (56) aus einem Metall besteht, welches keine Funken erzeugt.

12. Vorrichtung nach einem der vorhergehenden Ansprüche, dadurch gekennzeichnet, daß außerdem ein zusätzliches Stützelement vorgesehen ist, welches vom Gehäuseelement (16) zum Sammelbehälter absteht, um eine Relativbewegung zwischen den Gehäuseelementen (16) und dem Sammelbehälter während der Bedienung der Vorrichtung (10) zu stabilisieren.

13. Vorrichtung nach Anspruch 12, dadurch gekennzeichnet, daß das zusätzliche Stützelement drehbar am länglichen Gehäuseelement (16) befestigt ist.

14. Vorrichtung nach Anspruch 12 oder 13, dadurch gekennzeichnet, daß das zusätzliche Stützelement um einen rohrförmigen Vorsprung (62) des Gehäuseelementes (16), der die mittlere Öffnung (34) definiert, drehbar ist.

15. Vorrichtung nach einem der vorhergehenden Ansprüche, dadurch gekennzeichnet, daß die Vorrichtung (10) einen Filter (80) aufweist, der am Sammelbehälter befestigbar ist, um die Gase und Dämpfe zur Atmosphäre hin zu filtern.

16. Vorrichtung nach einem der vorhergehenden Ansprüche, dadurch gekennzeichnet, daß das Außengewinde am zweiten Ende (32) des länglichen Gehäuseelementes (16) derart ausgebildet ist, daß es mit standardisierten Gewindeöffnungen von handelsüblichen Aufbewahrungsfässern (38) verbindbar ist.

17. Sammelbehälter in Form eines Aufbewahrungsfasses (38) mit einer Vorrichtung nach einem der Ansprüche 12, 13 oder 14, dadurch gekennzeichnet, daß das zusätzliche Stützelement vom Gehäuseelement (16) in Richtung auf einen Rand (79) des Aufbewahrungsfasses (38) absteht, wobei der Rand (79) bevorzugt vom Hauptmantel des Aufbewahrungsfasses (38) absteht.

18. Sammelbehälter mit einer Vorrichtung (10) nach einem der Ansprüche 12, 13 oder 14.

## Revendications

1. Dispositif (10) destiné à perforer un récipient sous pression (12) afin de réduire la pression régnant dans celui-ci et de libérer, pour les recueillir dans un réceptacle, les gaz et résidus contenus dans celui-ci, ledit dispositif (10) comprenant:
- un élément de logement (16) de forme générale allongée, définissant une cavité allongée (24) comportant des ouvertures (26, 28) à ses première et seconde extrémités (30, 32), afin d'y recevoir un récipient sous pression (12) au niveau de ladite première extrémité (30), ledit élément de logement (16) comportant une ouverture intermédiaire (34), débouchant dans ladite cavité allongée (24) entre lesdites première et seconde extrémités (30, 32),
- un moyen de perforation (56), monté de façon mobile sur l'élément de logement (16) afin de pouvoir s'étendre au travers de l'ouverture intermédiaire (34), et destiné à percer le récipient sous pression (12), d'où il s'ensuit que les gaz et résidus que ce récipient contient sont évacués dans un réceptacle de recueil au travers de ladite ouverture (28) de ladite seconde extrémité (32),
- ainsi qu'un moyen de fixation (36) permettant de fixer ladite seconde extrémité (32) de l'élément de logement (16) au réceptacle afin de recueillir le contenu évacué par la seconde extrémité (32),
caractérisé en ce que
- le moyen de fixation (36) est agencé en vue de fixer de façon sélective la seconde extrémité (32) au réceptacle, et
- l'élément de logement (16) présente un épaulement interne (40) à l'intérieur de la cavité allongée (24) entre l'ouverture intermédiaire (34) et la première extrémité (30).

2. Dispositif selon la revendication 1, dans lequel le moyen de fixation est un embout fileté (36), ménagé sur la seconde extrémité (32) de l'élément de logement allongé (16), et destiné à s'engager dans un filetage du réceptacle de recueil.

3. Dispositif selon la revendication 1 ou 2, dans lequel la seconde extrémité (32) est un embout à filetage mâle (36).

4. Dispositif selon l'une quelconque des revendications précédentes, dans lequel un joint élastique (42) est disposé sur l'épaulement interne (40).

5. Dispositif selon l'une quelconque des revendications précédentes, dans lequel un moyen d'application d'effort (20) est monté de façon mobile sur l'élément de logement (16) afin de venir en contact avec le récipient sous pression (12) placé dans la cavité allongée (24) et de forcer ledit récipient sous pression (12) vers la seconde extrémité (32).

6. Dispositif selon la revendication 5, dans lequel le moyen d'application d'effort (20) comprend une plaque (72) montée sur une tige (74) qui est montée de façon coulissante sur l'élément de logement (16).

7. Dispositif selon la revendication 6, dans lequel la tige (74) est amenée à se bloquer par rapport à l'élément de logement (16) par suite d'un effort exercé par le récipient sous pression (12) contre la plaque (72), en s'opposant ainsi au déplacement de ladite plaque (72).

8. Dispositif selon l'une quelconque des revendications précédentes, dans lequel le moyen de perforation comprend un poinçon de perforation (56) s'étendant dans l'ouverture intermédiaire (34), ledit poinçon de perforation (56) comprenant un ressort (60) tendant à rappeler ledit poinçon (56) hors de la cavité allongée (24), et un levier (44), monté de façon pivotante sur l'extérieur de l'élément de logement (16), qui est relié audit poinçon (56) par l'intermédiaire d'une biellette pivotante (54), de façon à pousser ledit poinçon (56) à l'intérieur de ladite cavité allongée (24).

9. Dispositif selon la revendication 8, dans lequel le levier (44) et l'élément de logement (16) comportent respectivement des surfaces de contact venant en butée (48, 50) au niveau d'un axe de pivotement (46) dudit levier (44) sur ledit élément de logement (16), destinées à empêcher ledit levier (44) de pivoter en s'éloignant dudit logement (16) au-delà d'un angle prédéterminé.

10. Dispositif selon la revendication 8 ou 9, dans lequel le moyen de perforation comprend un joint (59) disposé sur le poinçon de perforation (56) afin de former un joint hermétique avec la partie de l'élément de logement (16) définissant l'ouverture intermédiaire (34).

11. Dispositif selon l'une quelconque des revendications précédentes, dans lequel ladite au moins une partie du poinçon de perforation (56) est faite d'un métal ne produisant pas d'étincelles.

12. Dispositif selon l'une quelconque des revendications précédentes, dans lequel est inclus en outre un élément de support auxiliaire s'étendant de l'élément de logement (16) jusqu'au réceptacle de recueil afin d'empêcher un mouvement relatif entre l'élément de logement (16) et ledit réceptacle de recueil pendant le fonctionnement dudit dispositif (10).

13. Dispositif selon la revendication 12, dans lequel l'élément de support auxiliaire est monté avec faculté de rotation sur l'élément de logement allongé (16).

14. Dispositif selon la revendication 12 ou 13, dans lequel l'élément de support auxiliaire est monté avec faculté de rotation autour d'une saillie tubulaire (62) de l'élément de logement (16) qui définit ladite ouverture intermédiaire (34).

15. Dispositif selon l'une quelconque des revendications précédentes, dans lequel ledit dispositif (10) comprend en outre un filtre (80) destiné à relier le réceptacle à l'atmosphère tout en filtrant les émanations de gaz.

16. Dispositif selon l'une quelconque des revendications précédentes, dans lequel le filetage mâle au niveau de la seconde extrémité (32) de l'élément de logement allongé (16) est destiné à se visser dans l'ouverture à filetage standard de fûts de stockage normalisés.

17. Réceptacle de recueil sous forme d'un fût de stockage (38), comprenant un dispositif selon les revendications 12, 13 ou 14, et dans lequel l'élément de support auxiliaire est destiné à s'étendre depuis l'élément de logement (16) jusqu'à un rebord (79) du fût de stockage (38), le rebord (79) dépassant de préférence de l'enveloppe principale dudit fût de stockage (38).

18. Réceptacle de recueil comprenant un dispositif (10) selon la revendication 12, 13 ou 14.
